# EUROPEAN PATENT APPLICATION

(11) **EP 2 506 161 A1**
(43) Date of publication of application: **03.10.2012**
(21) Application number: 11002766.1
(22) Date of filing: 01.04.2011
(51) Int. Cl.: G06F 17/30

(54) **Database search using synonym groups**

(71) Applicant: Waters Technologies Corporation, Milford, MA 01757 (US)
(72) Inventor: Lupu, Mihaela, Brasov 500439 (RO); Wintergalen, Andreas, Dr., 50529 Pulheim (DE)
(74) Representative: Vossius, Corinna

(57) **Abstract**

A computer-implemented method includes receiving a search query that includes a user specified search criteria directed toward one field of a plurality of fields associated with a synonym group, and performing a search of a database of a scientific data information system based on the search query. In addition to the user specified search criteria, the search includes all of other the fields associated with the defined synonym group.

## Description

### TECHNICAL FIELD

This disclosure relates to scientific data information systems, and in particular to the use of synonym groups for searching data stored within scientific data information systems.

### BACKGROUND

Modem science-driven organizations, such as biotechnology and pharmaceutical companies, face intense scientific, regulatory, and business challenges. As both regulatory (e.g., GxP) scrutiny and scientific complexity increase, companies are often forced to demonstrate in even greater detail that their product (e.g., biologic/pharmaceutical product) is well-characterized and that their production process is well-controlled. For example, GxP compliance requires a system of administrative and information access controls, as well as audit trails of user activities and record alterations.

At the heart of the challenge of operating in a regulated (e.g., GxP) environment is a pressure to capture as much orthogonal information as possible during the development process and leverage it in manufacturing and quality control.

With the continual pressure to capture high-quality data, and do more with it, each functional area within a science-driven organization, and the organization as a whole, could benefit from being able to access and process captured data more efficiently.

### SUMMARY

In one aspect, the invention provides a computer-implemented method that includes receiving a search query that includes a user specified search criteria directed toward one field of a plurality of fields associated with a synonym group, and performing a search of a database of a scientific data information system based on the search query. In addition to the user specified search criteria, the search includes all of other the fields associated with the defined synonym group.

Implementations may include one or more of the following features.

In some implementations, each of the plurality of fields includes a different descriptive label.

Certain implementations can also include displaying results of the search including an indication of any result values uncovered as a result of the association of the plurality of fields with the synonym group. For example, the results can be displayed in a table. The indication make be in the form of an asterisk adjacent a result value uncovered as a result of the synonym definition.

Methods can also include receiving input associating the plurality of fields with the synonym group.

In some implementations, a graphical user interface is displayed which allows a user to associate the plurality of fields with the synonym group.

In certain implementations, the graphical user interface allows the user to create the synonym group by selecting a corresponding option presented in the graphical user interface.

In some implementations, the graphical user interface allows the user to associate one or more of the plurality of fields with the synonym group by selecting the one or more fields from a list displayed in the graphical user interface.

Certain implementations can also include displaying a list of available fields that can be associated with the synonym group in the graphical user interface.

Other aspects, features, and advantages are in the description, drawings, and claims.

### BRIEF DESCRIPTION OF THE DRAWINGS

FIG. 1 is a schematic view of a scientific data information system.
FIG. 2 is a schematic view of a workstation model including the scientific data information system of FIG. 1.
FIG. 3 is a computer network including the scientific data information system of FIG. 1.
FIG. 4 is a screen shot illustrating an Administration page of a graphical user interface of the scientific data information system of FIG. 1.

Like reference numbers indicate like elements.

### DETAILED DESCRIPTION

Within a scientific data information system, data from various sources may be stored in a common database. For all data, descriptive information is stored in "Fields" which can include a descriptive label and a corresponding value that is specific to the data. "Fields" refer to metadata that is used to describe or provide information about a corresponding content item. The fields can include standard fields for every content item, which cannot be changed by the user, and custom fields, which are defined by and can be changed by the user. Depending on the source of the data, the label of specific fields may differ though it refers to the same type of information.

To simplify the query process, and to reduce the risk that a user might miss information when a query is performed, synonym groups can be defined. Within a synonym group, fields with different labels but with similar meanings can be associated with each other such that, when a user performs a query based on a search criteria that is part of a defined synonym group, all of the fields associated with the defined synonym group are included in the search. As a result the use of synonym groups can allow user to access information more efficiently.

### I. System Overview

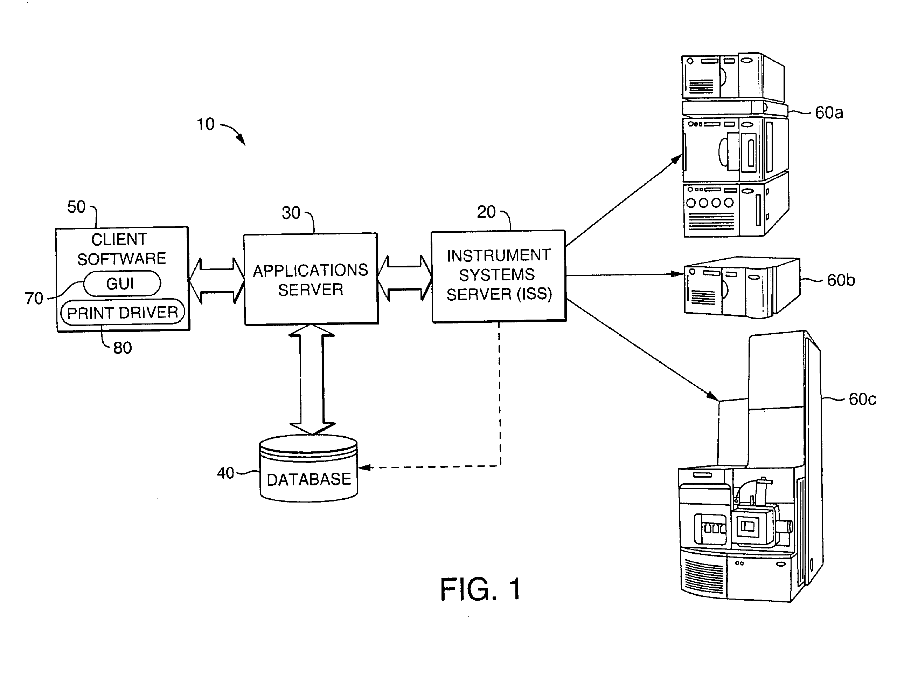

FIG. 1 illustrates a scientific data information system 10 that provides for acquisition of chromatography and mass spectrometry data (within a single software environment), instrument control, data processing and mining, and reporting, with GxP laboratory compatibility that allows for deployment throughout a science-driven organization. The scientific data information system includes an instrument systems server (ISS) 20, an application server 30, a database 40, and client software 50.

The ISS 20 is in communication with laboratory instruments 60a-c and includes computer-executable instructions for handling instrument control and data acquisition. The laboratory instruments 60a-c can include, for example, chromatographic instruments 60a, detectors 60b (e.g., UV detectors), and mass spectrometers 60c. Exemplary chromatographic instruments include ACQUITY UPLC® H-Class Bio System, available from Waters Corporation of Milford, Massachusetts. Exemplary detectors include the ACQUITY UPLC® Tunable UV (TUV) Detector, available from Waters Corporation. Exemplary mass spectrometers include the Xevo® G2 Tof mass spectrometer, available from Waters Corporation.

Generally, the ISS 20 performs two functions (i) system coordination, and (ii) data buffering. The ISS 20 can coordinate operation of the instruments based on information (e.g., instrument method and sample set information) received from the application server 30, which allows the ISS 20 to set up the instruments and start an acquisition. Instrument methods include instructions for controlling operating parameters of one of an attached instrument. The ISS 20 also provides status information back to the application server 30 during a run.

During data acquisition, the acquired data (e.g., chromatographic and/or mass spectrometry (MS) data) is received by the ISS 20 from the laboratory instruments 60a-c in native instrument format. The data is then translated by the ISS 20 to unified datafile format. Converted data is stored by the ISS 20 in a secure file buffer, and a rolling SHA1 checksum, incremented with each data packet, ensures fidelity and security of data. A final checksum is calculated upon acquisition completion and the raw data file is delivered to the database 40 where it is stored and locked.

The application server 30 is in communication with the ISS 20, the database 40, and the client software 50. The application server 30 is a collection of software that handles the business logic (i.e., the functions that the associated software performs on the data). The application server 30 retrieves data (from the database 40), processes and presents data to a graphical user interface 70, processes input data (e.g., from the graphical user interface 70), and sends method (e.g., instrument method) and sample set information to the ISS 20 to set up the instruments and start an acquisition. In addition, the application server 30 and the ISS 20 communicate on a host of configuration and setup issues, such as downloading instrument drivers to the ISS 20, configuring instrument systems, etc. This is driven from the application server 30 to the ISS 20.

The application server 30 includes computer-executable instructions for providing administrative and information access controls, as well as for providing audit trails of user activities and record alterations in accordance with GxP compliance requirements. Each unique user has tunable information access (method, data, results, etc.) limitations and activity restrictions dictated by their assigned roles. Users can include administrators, managers, analysts, and principal scientists.

The application server 30 also includes computer-executable instructions for performing data processing, e.g., to reduce the raw data acquired from the laboratory instruments 60a-c into usable reports. Data (e.g., chromatographic data, spectral (MS) data, and bioinformatics) can be processed, by the application server 30, while acquisition is ongoing if processing parameters are specified within a method (e.g., an analysis method). Analyis methods can describe expected system hardware configurations, separation and MS parameters, spectral processing and bioinformatics analysis tasks, and links to automated reporting templates, which can be used to automate production of standardized reports. Following data collection, a copy of the corresponding analysis method can be stored as part of each results set. The application server 30 also relays information, e.g., method and sample set information, to the ISS 20, which then controls the instruments 60a-c according to the information provided.

The application server 30 can also include a search engine, which can allow users to search the contents of the database 40.

The database 40 is a relational database. Relational databases enable real-time acquisition, processing, and management of large volumes of data from multiple sources. This can allow for simultaneous processing, review, and acquisition of data and parallel data acquisition from multiple instrument systems. Suitable relational databases include the Oracle® 11gR2 relational database, available from Oracle Corporation of Redwood Shores, California. Information stored in the database 40 can include many different data types (e.g., analyses, raw data, reports, historical data, methods, etc.) which may be stored in a unified data structure (also referred to as a "Content Item"). The use of a unified data structure can help to enable all laboratory functions to work with a common backbone of analytical information. This data standardization can also help to increase the exchange of information within an organization (e.g., between product development and product manufacturing), and, in some cases, even globally (e.g., with third-party partners).

The client software 50 includes computer-executable instructions (e.g., a Windows Presentation Foundation (or WPF) piece of code) for providing the graphical user interface 70 which displays data and allows the user to interact with the data (via the application server 30). Users can use the graphical user interface 70 to select/define methods (e.g., instrument methods, analysis methods, capture methods, signature methods), to process data, and electronically review and sign reports. When the user decides to process data, instructions are sent the application server 30, where the processing takes place.

The client software 50 also includes a print driver 80 for performing print capture. The software generates a print file and moves the file through the application server 30 and stores it on the database 40. The print capture feature can be used for brining in auxiliary information into the system.

The client software 50 can also include a browser that can communicate with the search engine of the application server 30 to allow the user to perform text searches for data within the database 40.

These software components (also known as computer programs, programs, software, software applications or code) include machine instructions for a programmable processor. As used herein, the terms machine-readable medium and computer-readable medium refer to any computer program product, apparatus and/or device (e.g., magnetic discs, optical disks, memory, Programmable Logic Devices (PLDs)) used to provide machine instructions and/or data to a programmable processor, including a machine-readable medium that receives machine instructions as a machine-readable signal. The term machine-readable signal refers to any signal used to provide machine instructions and/or data to a programmable processor.

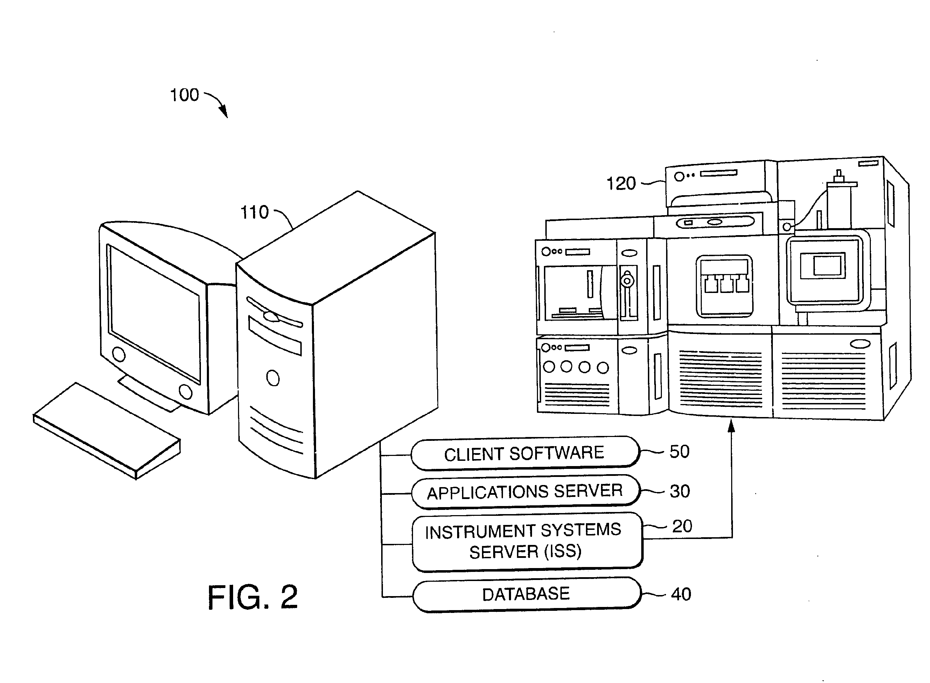

The scientific data information system 10 can be implemented in a variety of configurations, from an individual workstation model to a network model, such as a laboratory-based workgroup or networked enterprise environment. In a workstation model, one computer handles both the low-level (e.g., database management and instrument control) and high level (e.g., data processing and user interface) functions. For example, FIG. 2 illustrates a workstation 100 in which the client software 50, the application server 30, the ISS 20, and the database 40 all reside on a single computer 110. A suitable computer 110 for the workstation 100 is a Lenovo D20 Workstation configured with dual Xeon E5504 2.0 GHz processors, 8 GB RAM, Nvidia Quadro FX 18000 graphics card under the Windows 7 64-bit operating system. The workstation 100 can also include a key board and a pointing device (e.g., a mouse or a trackball) for receiving user input, and a display device for displaying the graphical user interface 70. The workstation 100 can be physically located next to a laboratory instrument 120, such as an liquid chromatography (LC)/mass spectrometry (MS) system.

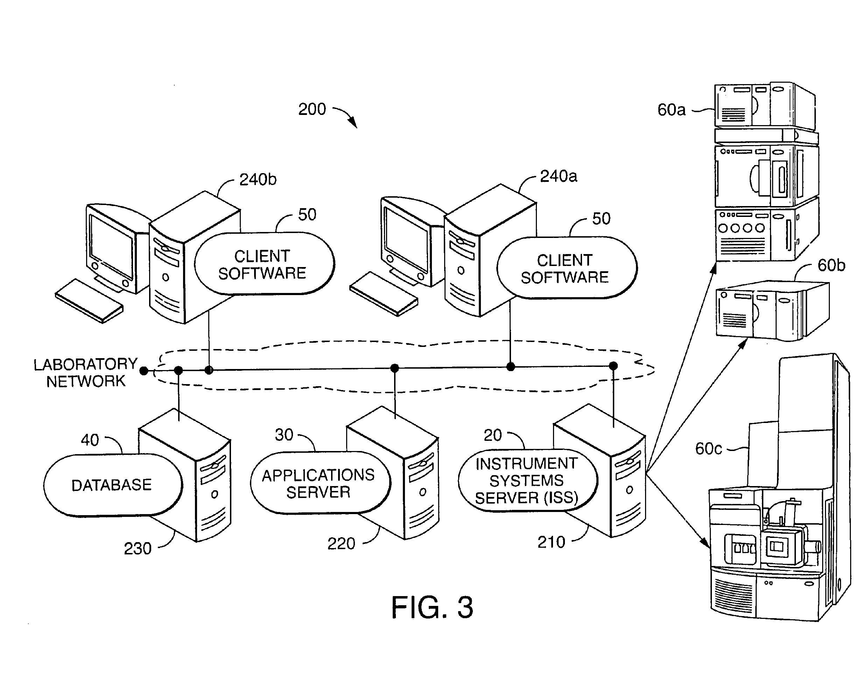

In a network model, the user interface, data processing, database management and instrument control functions can be split across separate computers which may be connected over a computer network, e.g., such as a local area network (LAN), wide area network (WAN), the Internet, or a combination thereof. For example, FIG. 3 illustrates a network 200 that includes an information system computer 210, an application server computer 220, a database management computer 230 and one or more client PC's 240a, 240b on which the ISS 20, the application server 30, the database 40, and the client software 50 reside, respectively. In some cases, such as in a laboratory-based workgroup, the application server and the database may reside on a common computer.

Each of the network computers can include a processor for processing instructions (e.g., stored in memory or on a storage device) for execution within the corresponding computer; a memory (e.g., volatile memory, non-volatile memory, a magnetic disk, an optical disk, etc.) for storing information within the corresponding computer; and a storage device (e.g., a floppy disk device, a hard disk device, an optical disk device, or a tape device, a flash memory, etc.) for providing mass storage for the corresponding computer.

### II. Synonyms

Within the scientific data information system 10, data from various sources may be stored in the database 40. This can include data acquired from the connected instruments 60a-c as well as data that is captured from other data sources via capture processes (e.g., file capture and print capture).

For all data, descriptive information is stored in 'Fields' which can include a descriptive label (e.g., 'Sample ID') and a corresponding value that is specific to the data. Depending on the source of the data, the label of specific fields may be a little different though it refers to the same type of information. One example is the descriptive label for the unique identifier of a sample, which can be 'Sample Name,' 'Sample ID,' 'Sample Number,' 'Sample No.,' etc.

If a user wants to perform a search in the database 40 to get information for a specific sample, the user may need to consider these different labels in the query definition, which may be cumbersome to do and may run the risk of missing a corresponding label in the query. In some cases, the user may not be aware of this potential issue, and, therefore, it is possible that the user might miss important information when a query is performed.

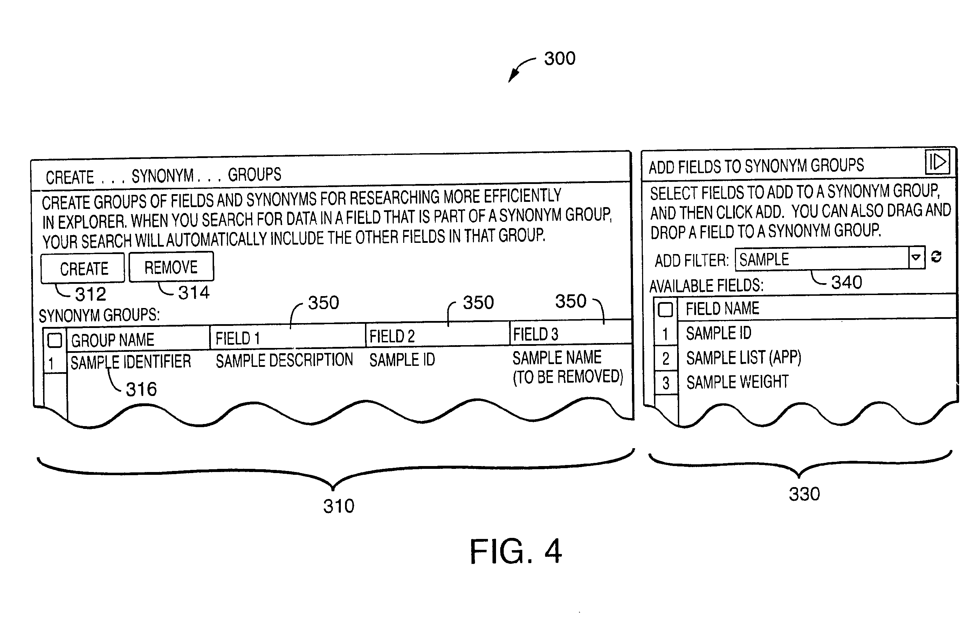

Referring to FIG. 4, synonym groups can be defined via an Administration page 300 of the user interface 70 by an authorized user (e.g., an administrator).

The Administration page 300 includes a Synonym pane 310 that presents options (e.g., virtual buttons 312, 314) which can be selected to 'create' or 'remove' a synonym group. An authorized user can create a new synonym group by selecting (e.g., via a pointing device) the create button 312 and entering a name for the new synonym group in a group name cell 316.

In the example illustrated in FIG. 4, a new synonym group called `Sample Identifier' has been created and assigned the fields 'Sample Description,' 'Sample ID,'and 'Sample Name,' to the Sample Identifier synonym group. The fields can be assigned by selecting (e.g., via a pointing device) the synonym group from the Synonym pane 310 and then selecting the fields from a list provided in an Add Fields pane 330 on the Administration page 300.

The Add Fields pane 330 includes an add filter 340 that can be used to limit the list of fields that can be added. In the example illustrated in FIG. 4, the user has used the add filter 340 to list only those fields that include the characters "sam." The selected fields are displayed in field cells 350 next to the corresponding synonym group name in the synonyms pane 310.

Then, after a synonym group has been created, when a user performs a search of the database based on a search criteria that is part of a defined synonym group, all of the fields associated with the defined synonym group are included in the search.

### Example:

With the "Sample Identifier" synonym group defined as described above with reference to FIG. 4, when a user subsequently performs a search that includes "Sample ID = 0815" in the search criteria the search engine of the applications server would automatically search the database for the value '0815' also in the fields 'Sample description' and 'Sample Name.'

The results of the query can be displayed in the graphical user interface 70 in a table, as exemplified by Table 1, below, where the columns represent the various fields that are defined for the found items. If a value is found based on a synonyms definition the corresponding entry can be highlighted, e.g., with an asterisk.

**Table 1**

| **Name** | **Sample ID** | **Analyst** | **Date acquired** | **Study ID** | **Type** |
|---|---|---|---|---|---|
| Test1 | 0815 | User 1 | 01st july 2010... | BA647 | Analysis |
| Test2 | 0815 | User 2 | 01st july 2010... | BA647 | Analysis |
| ReportXYZ | 0815* | User 3 | 01st july 2010... | BA647 | Report |

Although a few implementations have been described in detail above, other implementations are within the scope of the following claims.

## Claims

1. A computer-implemented method, comprising:
receiving a search query that includes a user specified search criteria directed toward one field of a plurality of fields associated with a synonym group, and
performing a search of a database of a scientific data information system based on the search query,
wherein, in addition to the user specified search criteria, the search includes all of other the fields associated with the defined synonym group.

2. The method of claim 1, wherein each of the plurality of fields includes a different descriptive label.

3. The method of claim 1 or claim 2, in particular of claim 1, further comprising displaying results of the search including an indication of any result values uncovered as a result of the association of the plurality of fields with the synonym group.

4. The method of any one of claims 1 to 3, in particular of claim 3, wherein the results are displayed in a table.

5. The method of any one of claims 1 to 4, in particular of claim 3, wherein the indication is an asterisk adjacent a result value uncovered as a result of the synonym definition.

6. The method of any one of claims 1 to 5, in particular of claim 1, further comprising receiving input associating the plurality of fields with the synonym group.

7. The method of any one of claims 1 to 6, in particular of claim 1, further comprising displaying a graphical user interface which allows a user to associate the plurality of fields with the synonym group.

8. The method of any one of claims 1 to 7, in particular of claim 7, wherein the graphical user interface allows the user to create the synonym group by selecting a corresponding option presented in the graphical user interface.

9. The method of any one of claims 1 to 8, in particular of claim 7, wherein the graphical user interface allows the user to associate one or more of the plurality of fields with the synonym group by selecting the one or more fields from a list displayed in the graphical user interface.

10. The method of any one of claims 1 to 9, in particular of claim 7, further comprising displaying a list of available fields that can be associated with the synonym group in the graphical user interface.
